# NEUE EUROPÄISCHE PATENTSCHRIFT

(11) **EP 1 141 543 B2**
(45) Veröffentlichungstag und Bekanntmachung des Hinweises auf die Entscheidung über den Einspruch: **20.11.2013**
(45) Hinweis auf die Patenterteilung: 01.12.2004
(21) Anmeldenummer: 99963451.2
(22) Anmeldetag: 09.12.1999
(51) Int. Cl.: B08B 17/06, F03D 11/00, F03D 1/06

(54) **ROTORBLATT FÜR EINE WINDTURBINE**
ROTOR BLADE OF A WIND TURBINE
PALE DE ROTOR DESTINEE A UNE TURBINE EOLIENNE

(30) Priorität: 09.12.1998 DE 29822003 U; 28.06.1999 DE 19929386; 01.10.1999 DE 19947211; 25.10.1999 DE 19951346
(43) Veröffentlichungstag der Anmeldung: 10.10.2001
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP1999/009691
(87) Internationale Veröffentlichungsnummer: WO 2000/034651

(56) Entgegenhaltungen:
- EP-A- 0 284 187
- EP-A- 0 354 022
- EP-A- 0 659 641
- EP-A1- 0 284 187
- EP-A1- 0 652 367
- EP-A1- 0 659 641
- EP-A2- 0 354 022
- EP-A2- 0 846 617
- EP-B1- 0 543 266
- EP-B1- 0 772 514
- EP-B1- 0 772 541
- DD-A- 117 645
- DE-A- 2 121 191
- DE-A- 3 903 704
- DE-A1- 3 710 691
- DE-A1- 3 901 012
- DE-A1- 3 903 704
- DE-A1- 19 614 420
- DE-U1- 29 603 278
- DE-U1- 29 709 342
- DE-U1- 29 805 833
- DK-W- 9 500 238
- GB-A- 1 260 484
- GB-A- 1 477 055
- US-A- 3 743 440
- US-A- 4 071 688
- US-A- 4 071 688
- US-A- 4 650 138
- US-A- 4 666 762
- US-A- 4 692 094
- US-A- 4 706 910
- US-A- 4 759 516
- US-A- 4 759 516
- US-A- 4 865 271
- US-A- 4 930 729
- US-A- 4 966 527
- US-A- 5 109 442
- US-A- 5 109 442
- US-A- 5 133 516
- US-A- 5 194 723
- US-A- 5 244 956
- US-A- 5 386 955
- US-A- 5 401 149
- US-A- 5 499 904
- US-A- 5 681 661
- US-A- 5 747 561
- US-A- 5 848 769
- GREEN MOUNTAIN POWER CORPORATION: 'GMP's Searsburg Wind Power Facility Nears Completion' WIND POWER NEWS Bd. 3, Nr. 1, März 1997, VERMONT, Seiten 1 - 7
- I.P. BOND ET AL: 'Wind Engineering', Bd. 17, teil 2 Juni 1993, MULTI-SCIENCE PUBLISHING COMPANY, ESSEX Seiten 100 - 107
- G. BÖHMEKE ET AL.: 'Windpower '91 Proceedings', 24 September 1991, AMERICAN WIND ENERGY A, ESPOO vol. '"Development of Wind Technology for the Finnish Climate"', Seiten 405 - 412
- H. UETZ, ET AL.: '"Tribologie der Polymere"', 1985, CARL HANSER VERLAG, MÜNCHEN WIEN
- B. HONG ET AL.: '"New Hybrid Urethane Elastomers as Erosion Protection Materials for Helicopter Rotor Blades"', Bd. 2, 1996, T.J., WIGGINS, FORT EUSTIS, VIRGINIA
- 'Aircraft surface coatings reduce drag, may protect against corrosion', Bd. 90, Februar 1982, AUTOMOTIVE ENGINEERING Seiten 73 - 78
- Wikipedia-Artikel "Paraffin"
- H.R. PRUPPACHER ET AL: '"Microphysics of Clouds and Precipitation"', 1997, KLUWER ACADEMIC PUBLISHER Seiten 135 - 137
- ING. S. ARMBRUST: 'Das Erosionsverhalten faserverstärkter Werkstoffe' "KUNSTSTOFFE" Nr. 12, 1973, Seiten 907 - 910

## Beschreibung

Rotorblätter für Windenergieanlagen sind in vielfacher Form bekannt. An einer Windenergieanlage stellen die Rotoren bzw. deren Rotorblätter die Hauptschallquelle dar. Aus akzeptanz- und lärmschutzrechtlichen Gründen soll/muß darauf hingearbeitet werden, die Schallemissionen so gering wie möglich zu halten, da Windenergieanlagen auch oft in der Nähe von Wohngebäuden aufgestellt werden. Die sich mit einer Windenergieanlage bzw. einem Windenergiekonverter bislang einstellenden Schallemissionen führen auch dazu, daß Windenergieanlagen aufgrund der Lärmentstehung Widerständen aus Bevölkerungskreisen entgegenstehen und sich diese Anlagen deswegen teilweise schwer oder gar nicht durchsetzen können, da die Genehmigungsbehörden wegen der bestehenden Umweltauflagen -auch Lärm ist ein Umweltbelastungsfaktor - die Genehmigung von Windenergieanlagen verweigern.

Es sind bereits vielfach Vorschläge gemacht worden, ein Rotorblatt einer Windenergieanlage konstruktiv so zu verändern, daß sich eine Schallreduktion einstellt. Beispielhaft sei hier auf die Dokumentation, wie sie in EP-A-0 652 367 oder DE 196 14 420.5 veröffentlicht ist, verwiesen.

Allerdings ist die Reduzierung des Schalls durch konstruktive Maßnahmen am Rotorblatt nur begrenzt möglich.

Es ist daher das Ziel der Erfindung, die Schallemission von Windenergieanlagen weiter zu verbessern.

Dieses Ziel wird erfindungsgemäß mit einem Windenergieanlagen-Rotorblatt mit den Merkmalen nach Anspruch 1 erreicht. Vorteilhafte Weiterbildungen sind in den weiteren Ansprüchen beschrieben.

Wenn die Oberfläche eines Windenergieanlagen-Rotorblattes wenigstens teilweise mit einer flüssigkeits- und/oder eisabweisenden Schicht versehen wird, dann wird das Rotorblatt auch rauher. Anstatt also das Rotorblatt mit einer Beschichtung aus einem Farbanstrich zu versehen, welcher dem Rotorblatt oberseitig eine größtmögliche Glätte verleiht, wird genau das Gegenteil gemacht, nämlich eine in der Mikrostruktur rauhe Oberfläche gegeben. Solche Oberflächen sind beispielsweise auch von Lacken oder Beschichtungen bekannt, die die Funktionalität des sogenannten "Lotuseffekts" erfüllen, so daß Wasser/Eis nur schwach an der Oberfläche haftet. Hierbei besteht die Beschichtung, die aus einem Farbanstrich geschaffen wird aus einer Art Nagelbett in Nanogröße. Diese Nano-Nägel des Nagelbetts rauhen die Oberfläche des Rotorblattes nicht nur auf, sondern verleihen der Oberfläche auch eine geringere Härte, weil die einzelnen Nano-Nägel auch in ihrer Längsrichtung verformbar sind, bzw. in ihrer Struktur erheblich weicher sind, als die Glasfaserbeschichtung eines Rotorblattes.

Somit bewirkt die "Lotus-"Beschichtung auf dem Windenergieanlagen-Rotorblatt, daß die sich auf der Oberseite des Rotorblattes ausbildenden Wirbel durch die weiche Struktur der Oberfläche gedämmt werden bzw. den Luftwirbeln Energie entzogen wird, so daß insgesamt - wie festgestellt worden ist - der sich beim Rotieren des Rotorblattes einstellende Schall reduziert wird.

Als nicht erfindungsgemäße selbstreinigende Beschichtung bzw. Anstrich, mit dem eine erhebliche Schallreduzierung eines Rotorblattes im Betrieb erreicht werden kann, sei die Mikro-Silikonfarbe "Lotusan" (Marke der Firma ispo GmbH, ein Unternehmen der Dyckerhoff-Gruppe) genannt. Diese Mikro-Silikonfarbe wird von dem Unternehmen unter der Artikelbezeichnung Nr. 1950 vertrieben und als schmutz- und wasserabweisend beschrieben. Es ist auch möglich, die Beschichtung durch eine Folie auszubilden, deren Oberflächenstruktur eine wasserabweisende Schicht bildet. Selbstreinigende (nicht erfindungsgemäß) Oberflächen (und ihre Herstellung) sind auch aus EP 0 772 514 bekannt.

Das technische Gebiet derErfindung ist nachfolgend anhand der Beispiele und der Figuren erläutert.

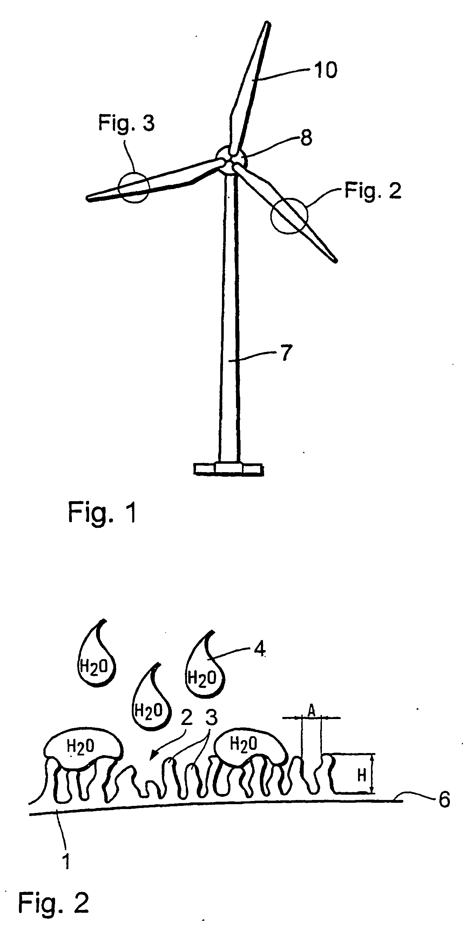

Fig. 1 zeigt die Ansicht einer Windenergieanlage mit einem Rotor, welcher drei Rotorblätter 10 aufnimmt. In Fig. 1 ist eine Windenergieanlage vom Typ E-40 der Firma Enercon dargestellt.
Fig. 2 zeigt einen Ausschnitt eines Rotorblattes im Querschnitt. Hierbei ist zu sehen, daß sich auf der Oberfläche eine Beschichtung 1 bzw. ein Anstrich befindet, welcher ein Nagelbett 2 bildet, welches aus "Nano-Nägeln" 3 besteht. Der Abstand A zwischen den Nano-Nägeln liegt im Bereich von etwa 2 bis 250 µm und die Höhe H der Nano-Nägel liegt im Bereich von etwa 2 bis 250 µm. Die Nano-Nägel bestehen zum Beispiel aus hydrophoben Polymeren oder haltbar hydrophobierten Materialien. Besonders gute Ergebnisse zur Verminderung des durch das Rotorblatt erzeugten Schalls werden erzielt, wenn die Nano-Nägel eine Höhe von etwa 5 bis 60 µm aufweisen und ihr Abstand untereinander in etwa im Bereich von 5 bis 110 µm liegt.

Die Beschichtung des Rotorblattes mit einer Mikro-Silikonfarbe (zum Beispiel "Lotusan") hat auch zur Folge, daß Wasser (H₂O) bzw. andere Flüssigkeiten nicht auf der Rotorblattoberfläche haften bleiben. Somit wird auch jedem Eisansatz von vornherein die Grundlage entzogen.

Vorzugsweise ist die Beschichtung nicht zur Gänze auf dem Rotorblatt aufgebracht, sondern nur im letzten Drittel (vom Rotor aus gesehen) des Rotorblattes und dort bevorzugt im Bereich der Rotorblattvorderkante.

Durch die Ausbildung der Nano-Nägel 3 weist die Oberfläche des Rotorblattes eine sehr große Unregelmäßigkeit bzw. Rauhigkeit auf, so daß die Massenanziehung von Wassertropfen 4 (Moleküle) und der Rotorblattoberfläche nicht ausreicht, daß die Wassermoleküle daran haften bleiben. Die Nano-Nägel halten somit die Wasser-Fremdmoleküle quasi auf Abstand zur Oberfläche 6 des Rotorblattes, wodurch die Anziehungskraft zwischen den Wassermolekülen und der Oberfläche drastisch verringert ist.

Gleichzeitig haben die Nano-Nägel 3 für die Schallreduzierung quasi die Funktion eines "(Schall-)Stoßdämpfers", weil Wirbel (nicht dargestellt), die sich auf der Oberfläche des Rotorblattes naturgemäß ausbilden und die für die Schallerzeugung sorgen, auf die Nano-Nägel treffen, die ihrerseits durch ihre relativ große Beweglichkeit, verglichen zur starren Glasfaserstruktur des Rotorblattes, die Energie der Wirbel aufnehmen können und somit den Luftwirbeln Energie entziehen, so daß der Schall reduziert wird.

Die Beschichtung kann durch einen Anstrich oder (nicht erfindungsgemäß) durch eine aufgeklebte Folie gebildet werden.

Die vorgenannte Beschichtung kann nicht nur auf einem Rotorblatt oder Teilen hiervon aufgebracht werden, sondern auch auf anderen Teilen der Windenergieanlage, beispielsweise am Turm 7 der Windenergieanlage und/oder an der Verkleidung 8. Diese Verkleidung - üblicherweise auch Gondel genannt - befindet sich am Kopfende des Turms und umgibt regelmäßig den Generator der Windenergieanlage oder weitere Teile der Windenergieanlage, welche nicht direkt den Umwelteinflüssen ausgesetzt werden sollen. Die Beschichtung kann hierbei nicht nur außen am Turm bzw. des Rotorblatts und/oder der Verkleidung angebracht werden, sondern auch innenseitig. Hierzu ist es vorteilhaft, wenn innen- und/oder außenseitig Abtropfrinnen (nicht dargestellt) vorgesehen sind, über die beispielsweise das am Turm und/oder an der Verkleidung ablaufende Wasser aufgefangen, gesammelt und kontrolliert abgeführt werden kann. Solche Rinnen verlaufen bevorzugt im wesentlichen senkrecht (oder leicht geneigt hierzu) zur Turmlängsachse an der Turmwandung und die aufgefangene Flüssigkeit wird über ein angeschlossenes Fallrohr abgeführt.

Die Reduzierung der Schallentwicklung kann alternativ oder in Ergänzung zu der vorbeschriebenen Lösung auch dadurch erreicht werden, daß das Rotorblatt eine spezielle Oberfläche aufweist nach Art einer "Haifischhaut". Diese Oberfläche kann durch eine Folienbeschichtung geschaffen werden. Eine solche Folie wird beispielsweise von der Firma 3M unter der Typenbezeichnung 3M 8691 Drag Reduction Tape (Riblet Tape) vertrieben. Diese Folie wurde im Auftrag der Luftfahrtindustrie mit dem Ziel entwickelt, die Einsparung von Brennstoff bei Flugzeugen durch diese spezielle "Haifischhaut"-Oberfläche zu erreichen.

Die Struktur einer solchen "Haifischhaut-Folie" ist beispielsweise aus Veröffentlichungen von Dittrich W. Bechert (Abteilung Turbolenzforschung des Deutschen Zentrums für Luft- und Raumfahrt (DLR)) bekannt. Die Struktur einer "Haifischhaut-Folie" (Beschichtung) ist unter anderem auch in EP 0 846 617, DE-C-36 09 541 oder DE-C-34 14 554 detailliert beschrieben. Zur Vermeidung von Wiederholungen sei der Inhalt aller vorbeschriebenen Druckschriften auch Inhalt der vorliegenden Anmeldung.

Da der Schall bei Flugzeugen im wesentlichen durch die Triebwerke bestimmt ist, wird der von den Flugzeugen hervorrufene Schall nicht reduziert, zumal sich die Schallpegel, die aufgrund der aerodynamischen Begebenheiten am Flugzeug (Tragfläche) erzeugt werden, unterhalb der Mithörschwelle liegen und deshalb nicht wahrgenommen werden können.

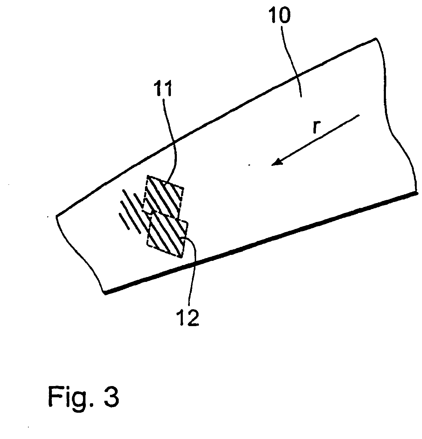

Eine Folie nach dem Prinzip von Haifischhaut (unter einer entsprechenden Oberfläche) wurde von einem Ingenieurteam um Herrn Dr. Dietrich W. Bechert der Abteilung Turbulenzforschung des deutschen Zentrums für Luft- und Raumfahrt (DLR) an der TU Berlin entwickelt. Bei einer solchen "Haifischhaut"-Folie weist die Oberfläche der Folie feine, in Strömungsrichtung verlaufende Rillen 11 auf. Diese Rillen sind nicht durchgängig, sondern auf Tableaus (Schuppen) 12 aufgebracht, welche ihrerseits versetzt zueinander angeordnet sind, wie dies in Figur 3 dargestellt ist. In dem dargestellten Beispiel weist eine "Schuppe" 12 fünf Rillen 11 auf, die über eine unterschiedlich große Länge verfügen und mit ihrer Längsrichtung senkrecht (oder parallel) zum Radius r des Rotorblattes einer Windenergieanlage ausgerichtet sind. Die Höhe H der Rillen 11 (bzw. Rippen) beträgt hierbei etwa 30 bis 70% des Rillenabstands s und vorzugsweise sind die Rillen (Rippen) keilförmig ausgebildet mit einem Keilwinkel von etwa 5 bis 60°.

Der normierte seitliche Rippenabstand der Haifischhaut-Folien-Oberfläche beträgt hierbei gemäss der Formel s⁺ = (s / ny) * √(tau_{O} /rho) 12 bis 22, wobei s der seitliche Rippenabstand, tau_{O} die Wandspannung einer glatten Referenzoberfläche, die der gleichen Strömung ausgesetzt ist, rho die Dichte des Strömungsmediums (Luft) und ny die kinematische Zähigkeit des Strömungsmediums (Luft) ist. Hierbei ist bevorzugt der normierte Rippenabstand s⁺ auf Umfangsgeschwindigkeit (oder Winkelgeschwindigkeit) eines Rotorblatts einer Windenergieanlage im Nennbetrieb abgestimmt. Vorzugsweise ist hierbei auf die Umfangsgeschwindigkeit der Rotorblattspitze bzw. Rotorblattspitzenbereichs (etwa 5 bis 25% der Rotorblattlänge) abgestimmt.

Der Rillenabstand s beträgt dabei etwa 0,001 bis 0,15 mm.

Es ist auch möglich, über die gesamte Rotorblattoberfläche Oberflächenstrukturen mit einem unterschiedlichen Rillenabstand und/oder Schuppenabstand vorzusehen, so dass die Abstimmung des normierten Rillenabstands stets auf die jeweilige Umfangsgeschwindigkeit des Rotors im Nennbetrieb gegeben ist.

Vorzugsweise weisen auch die seitlichen Ansätze der Rippen einen Krümmungsradius von maximal 50%, vorzugsweise maximal 20% des seitlichen Rippenabstands s auf.

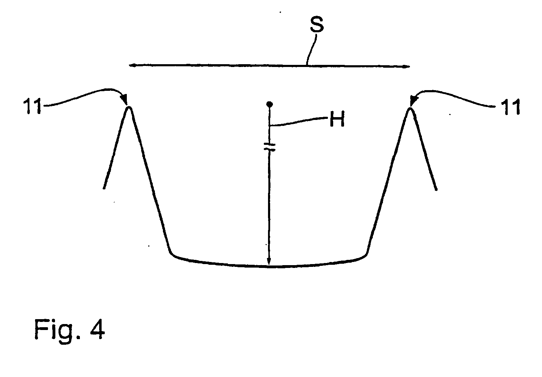

Es ist auch vorteilhaft, wenn die Oberfläche der Haifischhaut-Folie zwischen den Rippen einen Krümmungsradius von mindestens 200% des seitlichen Rippenabstands aufweist. Dies ist in einer vergrößerten Querschnittsansicht in Figur 4 dargestellt.

Erste Versuche haben gezeigt, dass die Schallabgabe eines Rotors mit Rotorblättern, die die vorbeschriebene Haifischhaut-Folie aufweisen (und damit auch die entsprechende beschriebene Oberfläche) um etwa 0,2 bis 3 dB (je nach Umfangsgeschwindigkeit und Böenverhältnissen) reduziert werden konnten.

Eine zu den vorbeschriebenen Schallreduktions-Maßnahmen alternative oder ergänzende Maßnahme besteht erfindungsgemäß darin, Teilbereiche eines Rotorblattes, insbesondere die Rotorblattvorderkante mit einem Erosionsschutzlack zu versehen. Als solcher Erosionsschutzlack wird erfindungsgemäß ein lösemittelhaltiger 2-Komponenten-PUR-Lack mit teflonähnlichen Oberflächeneigenschaften vorgesehen werden. Bislang werden auf Rotorblattvorderkanten Erosionsschutzfolien aufgeklebt, um die Erosion der Rotorblattvorderkante durch Schmutzteilchen/Regen/Hagel etc. zu verhindern. Das Aufkleben dieser Folie ist sehr aufwendig und muß mit größter Sorgfalt durchgeführt werden, um ein baldiges Ablösen im Betrieb zu verhindern. Trotz größter Sorgfalt kommt es dann doch immer wieder vor, daß sich die aufgebrachten Folien lösen, was unter Umständen auch zur Erhöhung des Schallpegels im Betrieb führen kann, in jedem Fall aber hohe Servicekosten verursacht, da die abgelösten bzw. abstehenden Folienteile (Folienecken) wieder am Rotorblatt neu befestigt werden müssen oder neue Folien angebracht werden müssen.

Als Erosionsschutzlack, mit welchem die Probleme der bekannten Erosionsschutzfolie beseitigt werden können, eignet sich eine Gleitversiegelung, wie sie von der Firma Coelan unter der Kennzeichnung VP 1 970M angeboten wird. Hierbei handelt es sich um einen lösemittelhaltigen 2-Komponenten-PUR-Lack mit teflonähnlichen Oberflächeneigenschaften sowie folgenden Charakteristika:

| | | |
|---|---|---|
| **Festkörpergehalt:** | Komponente A | : ca. 60% |
| | Komponente B | : ca. 5% |
| | | |
| | Mischung | : ca. 32% |
| | | |
| **Flammpunkt:** | -22 °C | |
| | | |
| **Dichte:** | Komponente A | : 1,11 g/cm³ (20°C) |
| | Komponente B | : 0,83 g/cm³ (20°C) |
| | | |
| **Viskosität:** | Komponente A | : ca. 80 s DIN 4 (23°C) |
| | Komponente B | : < 10 s DIN 4 (23°C) |
| | | |
| **Verarbeitungszeit:** | ca. 16 h im geschlossenen Behälter | |
| | | |
| **Hautbildung:** | ca. 30 min | (20°C; 50% relative Luftfeuchtigkeit) |
| | | |
| **Klebfrei nach:** | ca. 2 h | (20°C; 50% relative Luftfeuchtigkeit) |
| | | |
| **Durchtrocknung:** | ca. 96 h | (20°C; 50% relative Luftfeuchtigkeit) |
| | | |
| **Pendelhärte:** | 147 Sekunden | (nach König; DIN 53157) |
| | | |
| **Schnellbewitterung:** | 2350 h UV-A mit dem Q-Panel-Gerät bestanden | |
| **(QUV-Test)** | 2430 h UV-B mit dem Q-Panel-Gerät bestanden | |
| | | |
| **Mischungsverhältnis:** | Komponente A | : 100 Gewichtsteile |
| | Komponente B | : 100 Gewichtsteile |

Dieser Lack ist für den Bootsbau entwickelt worden, seine Verwendung bei Rotorblättern zur Verringerung der Geräuschentwicklung ist bislang jedoch noch nie vorgeschlagen worden und sehr vorteilhaft, weil hierdurch die bekannte Erosionsschutzfolie ersetzt und ihre Probleme beseitigt werden können.

## Patentansprüche

1. Windenergieanlagen-Rotorblatt, **dadurch gekennzeichnet, dass** auf Teilbereiche des Rotorblatts ein Erosionsschutzlack aufgebracht wird, welcher teflonähnliche Oberflächeneigenschaften aufweist, und dass der Erosionsschutztack ein lösemittelhaltiger 2-Komponenten-PUR-Lack ist.

2. Windenergieanlagen-Rotorblatt nach Anspruch 1, **dadurch gekennzeichnet, dass** der Erosionsschutzlack auf der Rotorblattvorderkante angebracht ist.

3. Windenergieanlage mit einem Rotoblatt nach einem der vorhergehenden Ansprüchs.

## Claims

1. Wind energy installation rotor blade, **characterized in that** an erosion protective varnish which has surface characteristics similar to Teflon is applied to area elements of the rotor blade, and **in that** the erosion protective varnish is a 2-component PUR varnish containing solvent.

2. Wind energy installation rotor blade according to Claim 1, **characterized in that** the erosion protective varnish is applied to the rotor blade leading edge.

3. Wind energy installation having a rotor blade according to one of the preceding claims.

## Revendications

1. Pale de rotor d'installation éolienne, **caractérisée en ce que** sur des zones partielles de la pale de rotor est appliqué un vernis de protection contre l'érosion ou l'abrasion, qui présente des propriétés d'état de surface similaires au Téflon et **en ce que** le vernis de protection contre l'érosion est un vernis PUR à deux composants renfermant du solvant.

2. Pale de rotor selon la revendication 1, **caractérisée en ce que** le vernis de protection contre l'érosion est appliqué sur le bord avant de la pale de rotor.

3. Installation éolienne comprenant une pale de rotor selon l'une des revendications précédentes.
